# FASCICULE DE BREVET EUROPEEN

(11) **EP 2 733 314 B1**
(45) Date de publication et mention de la délivrance du brevet: **05.04.2017**
(21) Numéro de dépôt: 12192848.5
(22) Date de dépôt: 15.11.2012
(51) Int. Cl.: F01D 25/24

(54) **Brides radiales de fixation et de positionnement pour viroles de carter de turbomachine axiale**
Radiale Befestigungs- und Positionierflansche für Gehäuseabschnitte einer axialen Turbomaschine
Radial attachment and positioning flanges for axial turbomachine casing sections

(43) Date de publication de la demande: 21.05.2014
(73) Titulaire: Safran Aero Boosters SA, 4041 Herstal (BE)
(72) Inventeur: Remy, Christophe, 4347 Fexhe-Le-Haut-Clocher (BE)
(74) Mandataire: Lecomte & Partners

(56) Documents cités:
- EP-A1- 1 936 125
- EP-A1- 1 939 410
- EP-A1- 1 939 459
- EP-B1- 2 077 183
- DE-A1-102009 055 614

## Description

### Domaine technique

L'invention a trait à un carter de turbomachine axiale. Plus particulièrement, l'invention a trait à des viroles jointives de carter de turbomachine axiale. Plus particulièrement, l'invention a trait aux brides de fixation entre des viroles de carter de turbomachine axiale. L'invention a trait à la concentricité entre deux viroles de carter d'une turbomachine fixée à l'aide de brides radiales. L'invention a également trait à une turbomachine axiale.

### Technique antérieure

Les turbomachines présentent généralement une pluralité de veines annulaires dans lesquelles circulent des flux d'air en vue de générer une force motrice. Le flux traverse une soufflante, des compresseurs, une chambre de combustion, des turbines. Dans ou entre ces éléments, le carter de la turbomachine contribue à guider un flux en le délimitant de la turbomachine elle-même.

Le carter forme des parois annulaires tubulaires accompagnant les évolutions de section de la veine. A cet effet, il comprend des viroles ayant une forme généralement tubulaire agencées selon l'axe de rotation de la turbomachine. Les viroles présentent des surfaces fonctionnelles en contact du flux. Elles peuvent former des surfaces internes et/ou externes délimitant matériellement la veine. Les viroles peuvent être des cylindres ou des portions de cylindre. Leur réunion forme sensiblement un cylindre ou une base de cône de longueur voulue.

Les surfaces fonctionnelles des viroles doivent respecter autant que possible la géométrie théorique de veine d'air, et en particulier sa continuité. Cette exigence ce traduit par le fait que les différentes viroles doivent respecter une concentricité générale ; sans quoi des ressauts ou des coudes peuvent apparaître dans la veine. Ces défauts conduisent à une réduction du rendement de la turbomachine. Des modes de fonctionnement incontrôlés peuvent naître.

Le document EP1 293 645 A1 présente un assemblage de deux viroles consécutives à l'aide de brides traversées par des vis axiales pour leur fixation. L'une des viroles présente une portée cylindrique femelle dans laquelle s'introduit une portée cylindrique mâle de l'autre virole, de manière à former un assemblage arbre-alésage. Les portées cylindriques mâle et femelle sont implantées à la base des brides. Ce type d'assemblage permet d'optimiser le positionnement et l'orientation des viroles l'une par rapport à l'autre. Cependant, les vis de serrage nécessitent une surface d'implantation libre d'obstacle. Cette surface peut être supérieure à l'encombrement intrinsèque des vis pour améliorer la répartition des contraintes mécaniques. La superposition de la portée cylindrique et de la surface d'implantation d'une vis impose d'augmenter le rayon extérieur de la bride. Le rayon de raccordement entre la bride et la portée cylindrique augmente encore le rayon extérieur de la bride. Cette taille de bride est encombrante, et alourdit la virole. Une telle bride radiale peut présenter des difficultés à être implantée dans un bec de séparation présentant une finesse donnée. La présence d'équipements dans le bec peut interdire son montage.

Le document EP2 077 183 B1 divulgue une jonction entre deux viroles de turbomachine positionnées l'une par rapport à l'autre grâce à leurs brides. Celles-ci sont implantées aux extrémités axiales des viroles. Les extrémités radiales des brides présentent les portées mâles et femelles. Cette solution permet un positionnement optimal tout en s'affranchissant des contraintes liées à la surface d'implantation des vis. Or, elle nécessite une portion cylindrique au sommet d'une des brides, ce qui augmente le rayon de cette dernière. Le document de brevet EP 1 939 459 A1 divulgue un carter de turbomachine conforme au préambule de la revendication 1.

### Résumé de l'invention

### Problème technique

L'invention a pour objectif de résoudre au moins un des problèmes présenté par la technique antérieure. L'invention a pour objectif de réduire l'encombrement radial des brides de fixation de deux viroles de carter de turbomachines axiales. L'invention a également pour objectif d'alléger l'assemblage de deux viroles de carter de turbomachines axiales.

### Solution technique

L'invention a trait à un carter de turbomachine axiale apte à canaliser un flux annulaire dans ladite turbomachine, le carter comprenant une première virole et une deuxième virole destinées à être jointives et coaxiales, la première virole comprenant une bride et une surface de centrage essentiellement cylindrique et la deuxième virole comprenant une bride et des moyens de centrage destinés à coopérer avec la surface de centrage, remarquable en ce que la bride de la première virole comprend des découpes réparties le long de sa circonférence et les moyens de centrage s'étendent axialement depuis la bride de la deuxième virole au travers desdites découpes jusqu'à la surface de centrage lorsque les deux brides sont en contact.

Suivant un mode avantageux de l'invention, les découpes de la bride de la première virole sont des festons ou des ouvertures.

Suivant un encore autre mode avantageux de l'invention, le prolongement axial des découpes intersecte la surface de centrage.

Suivant un encore autre mode avantageux de l'invention, la surface de centrage forme une surépaisseur de la première virole.

Suivant un encore autre mode avantageux de l'invention, le rayon R2 de la surface de centrage est inférieur au rayon R3 de l'extrémité radiale de la bride de la première virole.

Suivant un encore autre mode avantageux de l'invention, la première virole comprend un bourrelet annulaire adjacent à la bride de la première virole, la surface de centrage étant au sommet du bourrelet annulaire, ou la surface de centrage forme une gorge annulaire dans la première virole.

Suivant un encore autre mode avantageux de l'invention, la surface de centrage est à moins de 30 mm de la bride de la première virole, préférentiellement à moins de 20 mm, plus préférentiellement à moins de 5 mm, éventuellement la surface de centrage et la bride de la première virole sont jointives.

Suivant un encore autre mode avantageux de l'invention, les découpes présentent un contour fermé dans la bride, ou un contour ouvert au niveau du bord libre de la bride.

Suivant un encore autre mode avantageux de l'invention, les moyens de centrage sont à distance radialement du profil des découpes de la bride de la première virole.

Suivant un encore autre mode avantageux de l'invention, la surface de centrage et les moyens de centrage sont usinés par tournage.

Suivant un encore autre mode avantageux de l'invention, la section transversale des moyens de centrage est généralement courbée, et les découpes sont plus larges que les moyens de centrage selon une direction circonférentielle.

Suivant un encore autre mode avantageux de l'invention, les moyens de centrage comprennent des surfaces de contact destinées à contacter la surface de centrage.

Suivant un encore autre mode avantageux de l'invention, chaque surface de contact décrit un angle de plus de 5°, préférentiellement plus de 15°, encore plus préférentiellement plus de 30° de la circonférence de la bride de la première virole.

Cette particularité permet d'améliorer la robustesse apportée au niveau de chaque surface de contact. Ainsi, les dimensions radiales des moyens de centrage peuvent être réduites, tout comme l'épaisseur des viroles. Au final, l'encombrement au niveau des brides peut être diminué. L'angle en question est mesuré sur le plan de la bride, par rapport à l'axe central des viroles.

Suivant un encore autre mode avantageux de l'invention, les viroles sont fixées l'une à l'autre à l'aide de moyens de fixation sur les brides des première et deuxième viroles, entre les découpes de la bride de la première virole.

Suivant un encore autre mode avantageux de l'invention, les brides des première et deuxième viroles présentent des rayons R3 extérieurs égaux.

Suivant un encore autre mode avantageux de l'invention, au cumul, les moyens de centrage décrivent physiquement plus de 10% de la circonférence de la deuxième virole, préférentiellement plus de 30%, encore plus préférentiellement plus de 50%.

Suivant un encore autre mode avantageux de l'invention, le carter est un carter de redresseur de turbine ou de compresseur.

Suivant un encore autre mode avantageux de l'invention, le compresseur est un compresseur basse pression.

Suivant un encore autre mode avantageux de l'invention, les viroles sont métalliques ou composites.

Suivant un encore autre mode avantageux de l'invention, la première virole et la deuxième virole sont chacune venues de matière.

Suivant un encore autre mode avantageux de l'invention, les viroles sont essentiellement de même diamètre et de même épaisseur.

Suivant un encore autre mode avantageux de l'invention, les viroles présentent une forme de révolution avec un profil de révolution courbe.

Suivant un encore autre mode avantageux de l'invention, au niveau des moyens de centrage, le fond des découpes est en retrait radial par rapport à la surface de centrage.

Suivant un encore autre mode avantageux de l'invention, la deuxième virole est en appui plan sur plan contre la bride radiale.

Suivant un encore autre mode avantageux de l'invention, le rayon de la surface de centrage R2 est plus proche du rayon moyen R1 de la première virole que du rayon R3 des extrémités des brides.

Le rayon moyen correspond à l'épaisseur moyenne du tube que forme la première virole.

Suivant un encore autre mode avantageux de l'invention, les moyens de centrage présentent une continuité de matière depuis la deuxième virole jusqu'à la surface de centrage.

L'invention a également trait à une turbomachine axiale comprenant un turbofan, au moins un compresseur, au moins une turbine dans lesquels circulent des flux canalisés par des carters, remarquable en ce qu'au moins un des carter est conforme à l'invention.

### Avantages apportés

L'invention permet de réduire l'encombrement radial des brides. L'invention utilise un centrage discontinu exploitant les zones entre les vis. Cet espace permet de positionner les deux viroles l'une par rapport à l'autre tout en réduisant l'encombrement radial de l'ensemble. Grâce à la première la réduction de rayon un gain de poids substantiel est réalisé.

Les procédés de fabrication nécessaires emploient des outillages standards pour des viroles. Les précautions utiles peuvent rester les mêmes pour atteindre une concentricité habituelle. L'invention permet de combiner une opération de tournage puis un fraisage pour créer de formes dont les tolérances géométriques sont optimales. Les procédés d'usinage sont simples, ils nécessitent un nombre réduit d'opérations. Leurs coûts restent modérés.

Le diamètre extérieur d'une bride radiale disposée dans un bec de séparation pourra être réduit. Cette particularité permet de ne pas apporter de contraintes pour le dimensionnement du bec de séparation. Ce dernier pourra être aminci en cas de besoin, par exemple pour mieux répondre à une géométrie de veine souhaitée.

L'invention ne nécessite pas de pièces intermédiaires pour atteindre sa compacité et sa précision. Cette particularité permet de maintenir un nombre d'interfaces mécaniques faibles. L'impact des jeux mécaniques est moindre, les coûts de métrologie associés restent réduits.

### Brève description des dessins

La figure 1 représente une turbomachine selon l'invention.
La figure 2 est un schéma d'un compresseur de turbomachine selon l'invention.
La figure 3 illustre une jonction entre deux viroles de carter selon un premier mode de réalisation de l'invention.
La figure 4 ébauche une coupe de la jonction entre deux viroles du carter suivant l'axe 4-4 tracé sur la figure 3 selon le premier mode de réalisation de l'invention.
La figure 5 illustre une jonction entre deux viroles de carter selon un deuxième mode de réalisation de l'invention.

### Description des modes de réalisation

Dans la description qui va suivre, les termes intérieur et extérieur renvoient à un positionnement par rapport à l'axe de rotation d'une turbomachine axiale.

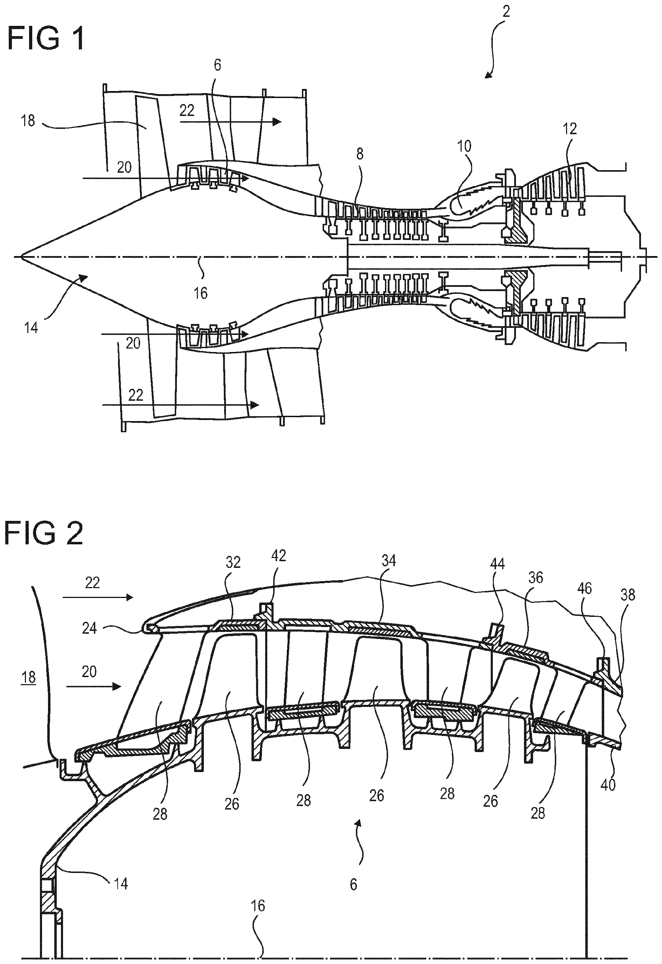

La figure 1 schématise une turbomachine axiale. Il s'agit dans ce cas précis d'un turboréacteur double-flux. Le turboréacteur 2 comprend un premier niveau de compression, dit compresseur basse-pression 6, un deuxième niveau de compression, dit compresseur haute-pression 8, une chambre de combustion 10 et un ou plusieurs niveaux de turbines 12. En fonctionnement, la puissance mécanique de la turbine 12 transmise via l'arbre central jusqu'au rotor 14 met en mouvement les deux compresseurs 6 et 8. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 16 permet ainsi de générer un débit d'air et de comprimer progressivement ce dernier jusqu'à l'entrée de la chambre de combustion 12.

Un ventilateur d'entrée communément désigné « turbofan » 18 est couplé au rotor 14 et génère un flux d'air qui se divise en un flux primaire 20 traversant les différents niveaux sus mentionnés de la turbomachine, et un flux secondaire 22 traversant un conduit annulaire (partiellement représenté) le long de la machine pour ensuite rejoindre le flux primaire en sortie de turbine. Les flux primaire 20 et secondaire 22 sont des flux annulaires, ils sont canalisés par le carter de la turbomachine. A cet effet, le carter présente des parois cylindriques ou viroles qui peuvent être internes et externes. Ces viroles peuvent être montées au niveau du turbofan 18, des compresseurs (6, 8), entre les compresseurs, au niveau d'une turbine 12 ou entre des turbines.

La figure 2 est une vue en coupe d'un compresseur basse-pression 6 d'une turbomachine axiale 2 telle que celle de la figure 1. On peut y observer une partie du turbofan 18 et le bec de séparation 24 du flux primaire 20 et du flux secondaire 22. Le rotor 14 comprend plusieurs rangées d'aubes rotoriques 26, par exemple trois, et plusieurs rangées d'aubes statoriques 28, par exemple quatre. Chaque rangée d'aubes statoriques 28 est associée à une rangée d'aubes rotoriques 26 pour redresser son flux d'air, de sorte à convertir la vitesse du flux en pression. Chaque paire de rangées d'aubes de rotor et de stator associées forme un étage de compression du compresseur 6.

Le carter comprend des surfaces annulaires qui délimitent l'intérieur et l'extérieur du flux primaire 20. Le carter délimite l'extérieur du flux primaire le long du compresseur basse pression 6, et à la fois l'intérieur et l'extérieur entre les compresseurs (6, 8).

Le carter comprend plusieurs viroles (32, 34, 36, 38, 40). Le carter peut comprendre par exemple une première virole 32 externe ou virole amont qui est disposée en tête et qui par exemple est en contact du bec de séparation 24. Elle peut être reliée à la première rangée d'aubes statoriques. Le carter peut comprendre une deuxième virole 34 externe ou virole centrale. Celle-ci peut être reliée aux aubes statoriques 28 du deuxième et du troisième étage du compresseur 6. Le carter peut comprendre une troisième virole 36 externe ou virole aval. Celle-ci peut être en contact des aubes du dernier étage du compresseur. Elle peut être reliée à une virole externe de jonction 38, guidant le flux primaire 20 vers le compresseur en combinaison d'une virole interne 40.

Suivant une alternative de l'invention, la deuxième virole peut être formée de plusieurs tronçons axiaux de viroles. Cette alternative peut être avantageuse lorsque le compresseur présente plus de quatre rangées d'aubes statoriques. Alternativement, la première virole et la troisième virole peuvent chacune être reliées à plus d'une rangée d'aubes statoriques.

Les viroles sont fixées les unes aux autres au niveau de jonctions (42, 44, 46) grâce à des brides radiales. Des moyens de fixation telles des vis peuvent être insérés dans des orifices axiaux. Les brides radiales sont réalisées à au moins une extrémité axiale des viroles. Préférentiellement, la deuxième virole est fixée à l'aide de deux brides radiales : une amont et une aval. Certaines des viroles sont reliées à des parties structurantes de la turbomachine 2 au niveau de leurs brides radiales. Préférentiellement, un assemblage axial de viroles est essentiellement fixé aux parties structurantes de la turbomachine au niveau des brides radiales situées aux extrémités de l'assemblage.

Les viroles comprennent un corps tubulaire formé d'une paroi tubulaire. Les viroles ont généralement des formes de révolution, avec des profils de révolution autour d'axes de révolution. Préférentiellement, les axes de révolution sont confondus avec l'axe 16 de rotation. Leurs profils peuvent être arqués ou coudés. L'épaisseur des parois est inférieure à 5,00 mm, préférentiellement inférieure à 3,00 mm, encore plus préférentiellement inférieure à 1,50 mm. Les viroles sont avantageusement réalisées en titane.

Chaque virole peut comprendre des secteurs angulaires de virole externe, qui décrivent chacun une fraction du périmètre d'une la virole externe. Ces secteurs angulaires sont jointifs axialement, par exemple à l'aide de brides axiales vissées.

Les viroles peuvent servir de support de montage aux aubes statoriques 28. Elles peuvent y être fixées par soudage ou par vissage. Les viroles forment des cloisons aptes à guider les flux de la turbomachine. Elles sont préférentiellement étanches. Leur réunion forme une continuité de surface étanche, permettant d'atteindre des taux de compression élevés. Localement, des orifices peuvent être ménagés pour prélever de l'air dans la veine, ou en injecter. Les viroles peuvent présenter des gorges annulaires destinées à recevoir des couches de matériau abradable.

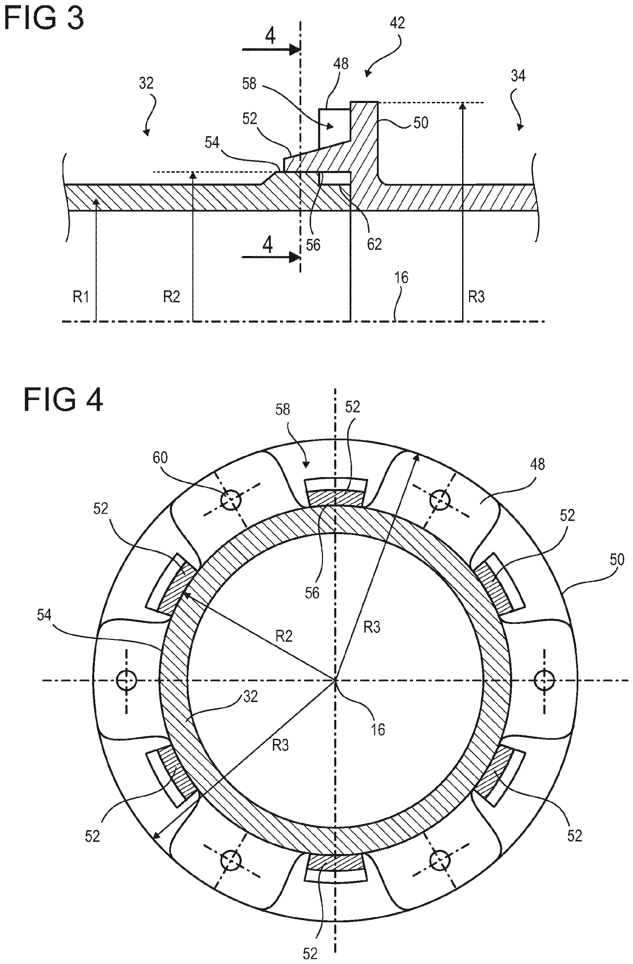

La figure 3 représente une jonction entre deux viroles consécutives, par exemple la jonction 42 entre la première virole 32 et la deuxième virole 34. La première virole 32 présente une bride radiale dite première bride 48. La deuxième virole présente une deuxième bride 50 radiale. Chacune des brides radiales présentent des surfaces d'appui planes, perpendiculaires à l'axe de rotation 16 de la turbomachine 2. Les surfaces d'appui permettent de former un appui plan sur plan. Ces surfaces d'appui permettent d'orienter les deux viroles l'une par rapport à l'autre, et permettent en particulier que leurs axes de révolution soient parallèles. Les brides radiales (48, 50) forment un contact continu dans le prolongement des corps des viroles, de sorte à soigner l'étanchéité de la jonction.

Pour assurer le positionnement des viroles (32, 34) dans le plan de leurs brides (48, 50), la deuxième virole 34 présente des moyens de centrage 52 radial venant en contact de moyens de centrage complémentaires. Les moyens de centrage complémentaires comprennent une surface de centrage 54 ou surface de référence. La surface de centrage 54 est généralement cylindrique et coaxiale à la première virole. Les moyens de centrage comprennent des surfaces de contact 56 venant en contact de la surface de centrage 54.

Les moyens de centrage 52 sont en contact de la surface de centrage 54 en au moins trois points non alignés. Préférentiellement, les moyens de centrage 52 sont en contact de la surface de centrage 54 en au moins deux surfaces distinctes, préférentiellement réparties sur le pourtour de la surface de centrage.

La surface de centrage 54 est réalisée par tournage afin de présenter une cylindricité optimale, et une perpendicularité par rapport au plan de la première bride 48 adéquate. La première bride 48 présente des découpes 58 ou des vides de matière débouchant. Les découpes 58 peuvent être des redans ou festons qui s'étendent radialement dans la première bride 48. Pour pouvoir réduire le rayon R3 extérieur des brides des viroles, les moyens de centrage 52 sont rapprochés de l'axe 16 et traversent les découpes. La surface de centrage 54 est disposée à la base de la première bride 48, à l'opposé de la deuxième virole par rapport à la première bride 48.

Pour s'assurer que les surfaces de contact 56 soient essentiellement en appui contre une surface de référence ayant une forme précise, en particulier la surface de centrage 54 qui est réalisée par tournage, les fonds 62 des vides de découpes 58 sont en retrait radial par rapport à la surface de centrage 54. Un tunnel arqué est délimité par le fond 62 des découpes 58 et les moyens de centrage 52.

La figure 4 représente une vue en coupe de la première virole et de la deuxième virole suivant l'axe 4-4 tracé sur la figure 3. Cette coupe est réalisée à l'interface entre les moyens de centrage 52 et la surface de centrage 54.

Les moyens de centrage 52 forment des portions discontinues pour pouvoir s'insérer dans les découpes 58, entre les parties restantes de la première bride 48. Leurs sections transversales correspondent à des segments courbés.

Les moyens de centrage 52 contiennent les deuxièmes surfaces de contact 56 qui sont réalisées par tournage. Ce mode de réalisation permet de bénéficier, du point de vue de la mise à forme, des mêmes avantages que pour la surface de centrage 54. Les surfaces de référence et de contact (54, 56) sont complémentaires. Préférentiellement, les surfaces de contact sont disposées sur les portions angulaires de tube. Lorsque les surfaces de contact et de centrage sont emmanchées, elles permettent un positionnement et une concentricité précis entre les viroles. La concentricité est inférieure à 0,10 mm, préférentiellement inférieure à 0,05 mm, encore plus préférentiellement inférieure à 0,02 mm. Cet emmanchement met à profit la précision d'un accouplement arbre alésage.

Les moyens de fixations sont disposés dans les parties restantes de la première bride 48. Ils traversent des orifices de montage 60 traversant les deux brides. Le dégagement nécessaire autour des moyens de fixation n'est pas en conflit avec les moyens de centrage 52 puisqu'ils sont décalés tangentiellement. Par conséquent, l'épaisseur radiale des moyens de centrage peut être augmentée indépendamment de la configuration des moyens de centrage. Une augmentation de cette épaisseur permet de rendre plus robuste la jonction entre les deux viroles (32, 34).

L'invention est particulièrement adaptée à une jonction entre deux viroles externes de compresseur basse pression 6. La résistance mécanique des brides ainsi réalisée est à la fois compatible à la pression du flux primaire ainsi qu'au contraintes thermiques, aux vibrations, aux chocs que peut subir un compresseur basse pression.

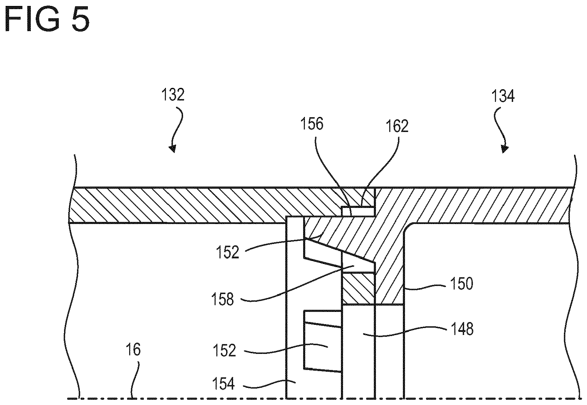

La figure 5 représente une jonction entre deux viroles selon un deuxième mode de réalisation de l'invention. Cette figure 5 reprend la numérotation des figures précédentes pour les éléments identiques ou similaires, la numérotation étant toutefois incrémentée de 100.

Les viroles (132, 134) peuvent être situées au niveau du turbofan 18 et délimiter un flux secondaire. Les viroles peuvent être des viroles internes délimitant l'extérieur du flux secondaire. Elles présentent des brides radiales s'étendant vers l'intérieur, vers l'axe 16 de rotation de la turbomachine. Elles sont disposées à la jonction entre deux viroles (132, 134).

La première virole 132 présente une première bride radiale 148 qui présente une découpe 158 dédouchante. Cette dernière peut être une ouverture dont le contour est inclus dans celui de la première bride radiale 148. La continuité de matière vers l'intérieur est avantageuse pour rigidifier la première bride et donc la jonction entre les viroles. L'extrémité libre des la première bride décrit essentiellement un cercle.

La première virole présente également une surface de centrage 154 orientée dans la direction radiale de la première bride radiale 148. Cette surface est implantée dans l'épaisseur de la première virole 132. Elle est généralement cylindrique. Elle forme une réduction de l'épaisseur de la première virole 132. Le fond 162 des découpes est en élévation par rapport à la surface de centrage 154. A cet endroit, la première virole 132 est encore plus fine qu'au niveau de la surface de centrage 154.

La deuxième virole 134 présente une deuxième bride 150 radiale sur laquelle sont implantés des moyens de centrage 152. Ils présentent des surfaces de contact 156 épousant la surface de centrage 154. Les moyens de centrage 152 traversent les découpes 158 jusqu'à atteindre la surface de centrage 154. Au niveau de la première bride radiale 148, les moyens de centrage 152 ont une épaisseur inférieure aux ouvertures, de sorte à être essentiellement en contact radial de la surface de centrage 154.

L'homme du métier pourra aisément inverser l'orientation des caractéristiques techniques qui présentent une orientation vers l'intérieur ou l'extérieur. Les caractéristiques techniques d'une découpe en forme d'ouverture peut être appliqués à une bride radiale orientée vers l'extérieur, tout comme une surface de centrage disposée dans le corps d'une virole.

## Revendications

1. Carter de turbomachine (2) axiale apte à canaliser un flux annulaire (20, 22) dans ladite turbomachine, le carter comprenant une première virole (32, 132) et une deuxième virole (34, 134) destinées à être jointives et coaxiales, la première virole (32, 132) comprenant une bride (48 , 148) et une surface de centrage (54, 154) essentiellement cylindrique et la deuxième virole (34, 134) comprenant une bride (50 , 150) et des moyens de centrage (52, 152) radial destinés à coopérer avec la surface de centrage (54, 154),
**caractérisé en ce que**
la bride (48 , 148) de la première virole (32, 132) comprend des découpes (58, 158) réparties le long de sa circonférence et les moyens de centrage s'étendent axialement depuis la bride (50 , 150) de la deuxième virole (34, 134) au travers desdites découpes (58, 158) jusqu'à la surface de centrage lorsque les deux brides sont en contact.

2. Carter selon la revendication 1, **caractérisé en ce que** les découpes (58, 158) de la bride (48 , 148) de la première virole (32, 132) sont des festons ou des ouvertures.

3. Carter selon l'une des revendications 1 à 2, **caractérisé en ce que** le prolongement axial des découpes (58, 158) intersecte la surface de centrage (54, 154).

4. Carter selon l'une des revendications 1 à 3, **caractérisé en ce que** la surface de centrage (54) forme une surépaisseur de la première virole (32).

5. Carter selon l'une des revendications 1 à 4, **caractérisé en ce que** le rayon (R2) de la surface de centrage (54, 154) est inférieur au rayon (R3) de l'extrémité radiale de la bride (48, 148) de la première virole.

6. Carter selon l'une des revendications 1 à 5, **caractérisé en ce que** la première virole (32) comprend un bourrelet annulaire adjacent à la bride (48) de la première virole, la surface de centrage (54) étant au sommet du bourrelet annulaire, ou la surface de centrage (154) forme une gorge annulaire dans la première virole (132).

7. Carter selon l'une des revendications 1 à 6, **caractérisé en ce que** les découpes (58, 158) présentent un contour fermé dans la bride (148), ou un contour ouvert au niveau du bord de la bride (48).

8. Carter selon l'une des revendications 1 à 7, **caractérisé en ce que** les moyens de centrage (52, 152) sont à distance radialement du profil des découpes de la bride (48, 148) de la première virole.

9. Carter selon l'une des revendications 1 à 8, **caractérisé en ce que** la surface de centrage (52, 152) et les moyens de centrage (52, 152) sont usinés par tournage.

10. Carter selon l'une des revendications 1 à 9, **caractérisé en ce que** la section transversale des moyens de centrage (52, 152) est généralement courbée, et **en ce que** les découpes (58, 158) sont plus larges que les moyens de centrage (52, 152) selon une direction circonférentielle.

11. Carter selon l'une des revendications 1 à 10, **caractérisé en ce que** les moyens de centrage comprennent des surfaces de contact (56, 156) destinées à contacter la surface de centrage (54, 154).

12. Carter selon l'une des revendications 1 à 11, **caractérisé en ce que** les viroles (32, 34, 132, 134) sont fixées l'une à l'autre à l'aide de moyens de fixation sur les brides (48, 50, 148, 150) des première et deuxième viroles, entre les découpes (58, 158) de la bride de la première virole.

13. Carter selon l'une de revendication 1 à 12, **caractérisé en ce que** les brides des première et deuxième viroles présentent des rayons (R3) extérieurs égaux.

14. Carter selon l'une de revendication 1 à 13, **caractérisé en ce qu'**au cumul, les moyens de centrage décrivent physiquement plus de 10% de la circonférence de la deuxième virole, préférentiellement plus de 30%, encore plus préférentiellement plus de 50%.

15. Turbomachine (2) axiale comprenant un turbofan (6), au moins un compresseur (6, 8), au moins une turbine (12) dans lesquels circulent des flux (20, 22) canalisés par des carters, **caractérisée en ce qu'**au moins un des carter est conforme à l'une des revendications 1 à 14.

## Patentansprüche

1. Gehäuse einer Turbomaschine (2), das in der Lage ist, einen ringförmigen Strom (20, 22) in der genannten Turbomaschine zu kanalisieren, wobei das Gehäuse einen erste Ring (32, 132) und einen zweiten Ring (34, 134) beinhaltet, die koaxial aneinanderliegen, wobei der erste Ring (32, 132) einen Flansch (48, 148) und eine Zentrierfläche (54, 154) beinhaltet, die im Wesentlichen zylindrisch ist und der zweite Ring (34, 134) einen Flansch (50, 150) und radiale Zentriermittel (52, 152) beinhaltet, die mit der Zentrierfläche (54, 154) zusammenwirken,
**dadurch gekennzeichnet, dass**
der Flansch (48, 148) des ersten Rings (32, 132) Ausschnitte (58, 158) beinhaltet, die sich auf seinem Kreisumfang verteilen und die Zentriermittel sich axial erstrecken, ausgehend von dem Flansch (50, 150) des zweiten Rings (34, 134) durch die genannten Ausschnitte (58, 158) hindurch, bis zur Zentrierfläche, wenn beide Flansche miteinander in Kontakt stehen.

2. Gehäuse nach Anspruch 1, **dadurch gekennzeichnet, dass** die Ausschnitte (58, 158) des Flansches (48, 148) des ersten Rings (32, 132) Festons oder Öffnungen sind.

3. Gehäuse nach einem der Ansprüche 1 bis 2, **dadurch gekennzeichnet, dass** die axiale Verlängerung der Ausschnitte (58, 158) die Zentrierfläche (54, 154) schneidet.

4. Gehäuse nach einem der Ansprüche 1 bis 3, **dadurch gekennzeichnet, dass** die Zentrierfläche (54) eine Überstärke des ersten Rings (32) bildet.

5. Gehäuse nach einem der Ansprüche 1 bis 4, **dadurch gekennzeichnet, dass** der Radius (R2) der Zentrierfläche (54, 154) kleiner ist, als der Radius (R3) des radialen Endes des Flansches (48, 148) des ersten Rings.

6. Gehäuse nach einem der Ansprüche 1 bis 5, **dadurch gekennzeichnet, dass** der erste Ring (32) einen ringförmigen Wulst beinhaltet, der an den Flansch (48) des ersten Rings angrenzt, wobei sich die Zentrierfläche (54) am Gipfel des ringförmigen Wulstes befindet, oder die Zentrierfläche (154) eine ringförmige Nut im ersten Ring (132) bildet.

7. Gehäuse nach einem der Ansprüche 1 bis 6, **dadurch gekennzeichnet, dass** die Ausschnitte (58, 158) eine geschlossene Kontur im Flansch (148), oder eine offene Kontur im Bereich des Randes des Flansches (48) aufweisen.

8. Gehäuse nach einem der Ansprüche 1 bis 7, **dadurch gekennzeichnet, dass** die Zentriermittel (52, 152) radial vom Profil der Ausschnitte des Flansches (48, 148) des ersten Rings entfernt sind.

9. Gehäuse nach einem der Ansprüche 1 bis 8, **dadurch gekennzeichnet, dass** die Zentrierfläche (52, 152) und die Zentriermittel (52, 152) mittels Drehbank bearbeitet werden.

10. Gehäuse nach einem der Ansprüche 1 bis 9, **dadurch gekennzeichnet, dass** der transversale Querschnitt der Zentriermittel (52, 1523) im allgemeinen gebogen ist und dass die Ausschnitte (58, 158) in Umfangsrichtung breiter sind, als die Zentriermittel (52, 152).

11. Gehäuse nach einem der Ansprüche 1 bis 10, **dadurch gekennzeichnet, dass** die Zentriermittel Kontaktflächen (56, 156) beinhalten, die dazu bestimmt sind, um mit der Zentrierfläche (54, 154) in Kontakt zu treten.

12. Gehäuse nach einem der Ansprüche 1 bis 11, **dadurch gekennzeichnet, dass** die Ringe (43, 34, 132, 134) miteinander verbunden sind, mithilfe von Mitteln für die Befestigung an den Flanschen (48, 50, 148, 150) des ersten und zweiten Rings, zwischen den Ausschnitten (58, 158) des Flansches des ersten Rings.

13. Gehäuse nach einem der Ansprüche 1 bis 12, **dadurch gekennzeichnet, dass** die Flansche des ersten und zweiten Rings gleiche Außenradien (R3) aufweisen.

14. Gehäuse nach einem der Ansprüche 1 bis 13, **dadurch gekennzeichnet, dass** sich die Zentriermittel insgesamt über mehr als 10%, bevorzugt über mehr als 30%, noch mehr bevorzugt über mehr als 50%, des Umfangs des zweiten Rings erstrecken.

15. Axiale Turbomaschine (2) umfassend ein Gebläse (6), mindestens einen Kompressor (6, 8), mindestens eine Turbine (12), wo durch Gehäuse geleitete Strömungen (20, 22) durchfließen, **dadurch gekennzeichnet, dass** mindestens eines der Gehäuse gemäß einem der Ansprüche 1 bis 14 ist.

## Claims

1. Axial turbomachine housing (2) suitable for channelling an annular flow (20, 22) in the said turbomachine, the housing comprising a first shell (32, 132) and a second shell (34, 134) to be contiguous and coaxial, the first shell (32, 132) comprising a flange (48, 148) and a substantially cylindrical centring surface (54, 154) and the second shell (34, 134) comprising a flange (50, 150) and radial centring means (52, 152) designed to mate with the centring surface (54, 154),
**characterized in that**
the flange (48, 148) of the first shell (32, 132) comprises cut-outs (58, 158) distributed along its circumference and the centring means extend axially from the flange (50, 150) of the second shell (34, 134) through the said cut-outs (58, 158) to the centring surface where the two flanges are in contact.

2. Housing in accordance with to Claim 1, **characterized in that** the cut-outs (58, 158) of the flange (48, 148) of the first shell (32, 132) are wave-shaped or openings.

3. Housing in accordance with one of Claims 1 to 2, **characterized in that** the axial extension of the cut-outs (58, 158) intersects the centring surface (54, 154).

4. Housing in accordance with one of Claims 1 to 3, **characterized in that** the centring surface (54) forms a thickened layer on the first shell (32).

5. Housing in accordance with one of Claims 1 to 3, **characterized in that** the radius (R2) of the centring surface (54, 154) is smaller than the radius (R3) of the radial extremity of the flange (48, 148) on the first shell.

6. Housing in accordance with one of Claims 1 to 5, **characterized in that** the first shell (32), includes an annular bead adjacent to the flange (48) of the first shell, the centring surface (54) being at the top of the annular bead or the centring surface (154) forming an annular groove in the first shell (132).

7. Housing in accordance with one of Claims 1 to 6, **characterized in that** the cut-outs (58, 158) have a closed shape in the flange (148) or an open shape at the edge of the flange (48).

8. Housing in accordance with one of Claims 1 to 7, **characterized in that** the centring means (52, 152) are radially remote from the profile of the cut-outs in the flange (48, 148) of the first shell.

9. Housing in accordance with one of Claims 1 to 8, **characterized in that** the centring surface (52, 154) and the centring means (52, 152) are machined by turning.

10. Housing in accordance with one of Claims 1 to 9, **characterized in that** the cross section of the centring means (52, 152) is generally curved, and the cut-outs (58, 158) are wider than the centring means (52, 152) in a circumferential direction.

11. Housing in accordance with one of Claims 1 to 10, **characterized in that** the centring means comprise contact surfaces (56, 156) designed to contact the centring surface (54, 154).

12. Housing in accordance with one of Claims 1 to 11, **characterized in that** the shells (32, 34, 132, 134) are fixed to each other by fastening means on the flanges (48, 50, 148, 150) on the first and second shells, between the cut-outs (58, 158) on the flange of the first shell.

13. Housing in accordance with one of Claims 1 to 12, **characterized in that** the flanges of the first and second external shells have equal outer radii (R3).

14. Housing in accordance with one of Claims 1 to 13, **characterized in that** the centring means physically cover more than 10% of the circumference of the second shell, preferably more than 30%, even more preferably more than 50%.

15. Axial turbomachine (2) including a turbofan (6), at least one compressor (6, 8), at least one turbine (12) in which the streams (20, 22) flow as directed by the housings, **characterized in that** at least one of the housings is in accordance with Claims 1 to 14.
